# EUROPÄISCHE PATENTANMELDUNG

(11) **EP 1 580 535 A2**
(43) Veröffentlichungstag der Anmeldung: **28.09.2005**
(21) Anmeldenummer: 05006650.5
(22) Anmeldetag: 24.03.2005
(51) Int. Cl.: G01D 5/26

(54) **Verfahren und Vorrichtung zur Erfassung einer Relativbewegung zwischen einem Detektor und einem Körper mit einer Oberflächenstruktur**

(30) Priorität: 26.03.2004 DE 102004014994
(71) Anmelder: Hofmann Mess- und Auswuchttechnik GmbH & Co. KG, 64319 Pfungstadt (DE)
(72) Erfinder: Danz, Günter, 64846 Gross-Zimmern (DE)
(74) Vertreter: Kirschner, Klaus Dieter

(57) **Zusammenfassung**

Es wird ein Verfahren und eine Vorrichtung zur Erfassung einer Relativbewegung zwischen einem Detektor und einem Körpers mit einer Oberflächenstruktur in Form eines Weges und/oder eines Winkels der Relativbewegung angegeben, die dadurch gekennzeichnet ist, dass die Bewegung der Oberflächenstruktur des Körpers mittels einer in dem Detektor vorgesehenen Kamera erfasst wird, dass aus der Folge der erfassten Oberflächenstrukturen die Bewegungsrichtung und die Bewegungsgeschwindigkeit der Relativbewegung bestimmt wird, und dass der zurückgelegte Weg aus der Bewegungsrichtung und der Bewegungsgeschwindigkeit bestimmt wird.

## Beschreibung

Die vorliegende Erfindung bezieht sich auf ein Verfahren und eine Vorrichtung Erfassung einer Relativbewegung zwischen einem Detektor und einem Körpers mit einer Oberflächenstruktur, wobei die Relativbewegung bei ortsfestem Detektor durch eine Bewegung des Körpers, bei ortfestem Körper durch eine Bewegung des Detektors oder durch Bewegen von sowohl dem Detektor als auch des Körpers verwirklicht wird.

Bei der Bestimmung des Winkels eines sich drehenden Rotationskörpers z.B. bei Wuchtmaschinen werden im Stand der Technik Winkelkodierer eingesetzt. Der Winkelkodierer umfasst eine Lichtquelle, einen Lichtdetektor und eine Lochscheibe. Der Lichtdetektor detektiert das Licht der Lichtquelle, wobei das Licht der Lichtquelle durch die sich drehenden Lochscheibe immer wieder unterbrochen wird. Der Lichtdetektor erzeugt daraus ein Rechtecksignal. Die Impulslänge entspricht dabei der Belichtungszeit des Lichtdetektors. Ein Auswertesystem empfängt das Signal des Lichtdetektors und bestimmt daraus die Position des sich drehenden Körpers.

Nachteilig bei diesem System ist, dass es mit einem relativ hohen Aufwand an Bauteilen, wie z.B. den Lichtdetektor, die Lichtquelle und dem Auswertesystem verbunden ist. Daraus resultiert auch eine entsprechende Komplexität und Fehleranfälligkeit des Winkelkodierers. Darüberhinaus wird das Auflösungsvermögen zur Lagebestimmung durch die Grösse, die Lage und die Anzahl der Löcher in der Lochscheibe bestimmt. Um eine höhere Auflösungsgenauigkeit bei der Lagebestimmung zu erhalten muss z. B. die Lochscheibe ausgetauscht werden. Dies ist mit einem relativ hohen Aufwand verbunden, da die Maschine, in diesem Beispiel die Wuchtmaschine, erst zerlegt werden muss.

Bei der Bestimmung des Weges eines sich bewegenden Körpers, z.B. bei der Bestimmung des Weges eines sich bewegenden Werkstücks bei NC-Maschinen, wird im Stand der Technik als Detektor ein mit der einer Antriebswelle für die Bewegung des Werkstücks gekoppelter Pulsgeber eingesetzt, ein Rechtecksignal erzeugt, das ein Maß für den zurückgelegten Weg des Werkstücks ist. Derartige Pulsgeber können die zurückgelegte Wegstrecke nur in einer Richtung bestimmen, und für eine Bestimmung eines Winkels unter dem sich das Werkstück zu der genannten Richtung bewegt, muß ein weiterer Detektor vorgesehen werden.

Die Aufgabe der Erfindung ist es folglich ein Verfahren und eine Vorrichtung zur Verfügung zu stellen, um einer Relativbewegung zwischen einem Detektor und einem Körpers mit einer Oberflächenstruktur zu erfassen ohne auf mechanische Mittel zurückgreifen zu müssen.

Die oben genannte Aufgabe wird durch die unabhängigen Ansprüche der vorliegenden Erfindung gelöst. Vorteilhafte Ausgestaltungen der vorliegenden Erfindung werden in den Unteransprüchen offenbart.

Zur Lösung dieser Aufgabe ist das erfindungsgemäße Verfahren zur Erfassung einer Relativbewegung zwischen einem Detektor und einem Körpers mit einer Oberflächenstruktur in Form eines Weges und/oder eines Winkels der Relativbewegung dadurch gekennzeichnet, dass die Bewegung der Oberflächenstruktur des Körpers mittels einer in dem Detektor vorgesehenen Kamera erfasst wird, dass aus der Folge der erfassten Oberflächenstrukturen die Bewegungsrichtung und die Bewegungsgeschwindigkeit der Relativbewegung bestimmt wird, und dass der zurückgelegte Weg aus der Bewegungsrichtung und der Bewegungsgeschwindigkeit bestimmt wird.

Eine vorteilhafte Ausgestaltung des erfindungsgemäßen Verfahrens, wobei der sich bewegende Körper ein rotationssymmetrischer, sich drehender Körper und der Detektor ortsfest angeordnet ist, ist dadurch gekennzeichnet, dass die Oberflächenstruktur an einer an dem sich drehenden Körper vorgesehenen Abtastfläche erfasst wird, und dass der aus der Bewegungsrichtung und der Bewegungsgeschwindigkeit bestimmte, zurückgelegte Weg in einen zurückgelegten Winkel umgerechnet wird.

Eine vorteilhafte Ausgestaltung des erfindungsgemäßen Verfahrens ist dadurch gekennzeichnet, dass der zurückgelegte Weg in eine definierte Anzahl von Inkrementen, beispielsweise 360 Inkremente, aufgeteilt wird. Mit dieser Inkrementierung ist eine direkte Umrechnung in die Winkeleinheit Grad möglich. Eine Umrechnung in jede andere geeignete Winkeleinheit ist darüberhinaus ebenfalls möglich.

Eine vorteilhafte Ausgestaltung des erfindungsgemäßen Verfahrens, wobei der sich bewegende Körper ein sich in einer Ebene gewegender Körper und der Detektor ortsfest angeordnet ist, ist dadurch gekennzeichnet, dass die Oberflächenstruktur an einer an dem sich drehenden Körper vorgesehenen Abtastfläche erfasst wird, und dass aus der Bewegungsrichtung und der Bewegungsgeschwindigkeit der zurückgelegte Weg des Körpers bestimmt wird.

Eine vorteilhafte Ausgestaltung des erfindungsgemäßen Verfahrens, wobei der Körper ortsfest angeordnet ist und der Detektor relativ zu dem Körper bewegt wird, ist
dadurch gekennzeichnet, dass die Oberflächenstruktur an einer an dem Körper vorgesehenen Abtastfläche erfasst wird, und dass aus der Bewegungsrichtung und der Bewegungsgeschwindigkeit der Relativbewegung die zurückgelegte Wegstrecke bestimmt wird.

Eine vorteilhafte Ausgestaltung des erfindungsgemäßen Verfahrens ist dadurch gekennzeichnet, dass eine Referenzmarke in vorgegebener Relation zu dem Körper vorgesehen wird.

Zur Lösung dieser Aufgabe ist die erfindungsgemäße Vorrichtung zur Erfassung einer Relativbewegung zwischen einem Detektor und einem Körpers mit einer Oberflächenstruktur in Form eines Weges und/oder eines Winkels der Relativbewegung gekennzeichnet durch eine in dem Detektor vorgesehene Kamera, die die Bewegung der Oberflächenstruktur des Körpers erfasst, und durch eine Prozessoreinrichtung, die aus der Folge der erfassten Oberflächenstrukturen die Bewegungsrichtung und die Bewegungsgeschwindigkeit der Relativbewegung und daraus dem zurückgelegte Weg der Relativbewegung bestimmt.

Eine vorteilhafte Ausgestaltung der erfindungsgemäßen Vorrichtung, wobei der sich bewegende Körper ein rotationssymmetrischer, sich drehender Körper und der Detektor ortsfest angeordnet ist, ist dadurch gekennzeichnet, dass die Kamera ausgestaltet ist, um die Oberflächenstruktur an einer an dem sich drehenden Körper vorgesehenen Abtastfläche zu erfassen, und dass der Prozessor ausgestaltet ist, um aus der Bewegungsrichtung und der Bewegungsgeschwindigkeit den zurückgelegten Weg zu bestimmen und ihn in einen zurückgelegten Winkel umzurechnen.

Eine vorteilhafte Ausgestaltung der erfindungsgemäßen Vorrichtung, wobei der sich bewegende Körper ein sich in einer Ebene gewegender Körper und der Detektor ortsfest angeordnet ist, ist dadurch gekennzeichnet, dass die Kamera ausgestaltet ist, um die Oberflächenstruktur an einer an dem sich drehenden Körper vorgesehenen Abtastfläche zu erfassen, und der Prozessor ausgestaltet ist, um aus der Bewegungsrichtung und der Bewegungsgeschwindigkeit der zurückgelegte Weg des Körpers zu bestimmen.

Eine vorteilhafte Ausgestaltung der erfindungsgemäßen Vorrichtung, wobei der Körper ortsfest angeordnet ist und der Detektor relativ zu dem Körper bewegt wird, ist dadurch gekennzeichnet, dass die Oberflächenstruktur an einer an dem Körper vorgesehenen Abtastfläche erfasst wird, und dass der Prozessor ausgestaltet ist, um der Bewegungsrichtung und der Bewegungsgeschwindigkeit der Relativbewegung die zurückgelegte Wegstrecke zu bestimmen.

Eine vorteilhafte Ausgestaltung der erfindungsgemäßen Vorrichtung ist dadurch gekennzeichnet, dass das Referenzmerkmal eine Markierung oder eine charakteristische Struktur ist.

Eine vorteilhafte Ausgestaltung der erfindungsgemäßen Vorrichtung ist dadurch gekennzeichnet, dass das Referenzmerkmal eine Kerbe oder ein Strich ist.

Eine vorteilhafte Ausgestaltung der erfindungsgemäßen Vorrichtung ist dadurch gekennzeichnet, dass das Referenzmerkmal eine separate die Refenrenzmarke ist, und dass ein separater Sensor zum Erfassen des Referenzmerkmals vorgesehen ist.

Eine vorteilhafte Ausgestaltung der erfindungsgemäßen Vorrichtung ist dadurch gekennzeichnet, dass der Sensor eine Fotodiode ist. Durch eine Fotodiode lassen sich zur Erfassung der Referenzmarke die Produktionskosten der Vorrichtung der vorliegenden Erfindung deutlich verringern.

Eine vorteilhafte Ausgestaltung der erfindungsgemäßen Vorrichtung ist gekennzeichnet durch eine Lichtquelle in dem Detektor, mit der die Oberflächenstruktur des Körper angestrahlt wird.

Eine vorteilhafte Ausgestaltung der erfindungsgemäßen Vorrichtung ist dadurch gekennzeichnet, dass die Lichtquelle eine Licht emittierende Diode (LED) ist. Durch die Verwendung einer LED kann die Baugrösse und der Energieverbrauch der Vorrichtung reduzieren, was einer Miniaturisierung der Vorrichtung zu gute kommt.

Eine vorteilhafte Ausgestaltung der erfindungsgemäßen Vorrichtung ist dadurch gekennzeichnet, dass die Kamera ein Kamerachip ist. Ein Kamerachip bietet den Vorteil der detailgenauen Bilderfassung mit einer hohen Abtastrate. Damit lässt sich eine hohe Auflösung bei der Bestimmung des Wegs oder des Winkels erreichen.

Eine vorteilhafte Ausgestaltung der erfindungsgemäßen Vorrichtung ist dadurch gekennzeichnet, dass der Kamerachip und der Prozessor auf einem Chip integriert sind.

Die Erfindung betrifft ferner eine Wuchtmaschine mit einer Vorrichtung zum Erfassen der Relativbewegung zwischen einem Detektor und einem Körpers mit einer Oberflächenstruktur der oben beschriebenen Art, wobei die Winkellage eines zu wuchtenden Rotors bestimmt wird.

Die Erfindung betrifft ferner eine NC-Maschine mit einer Vorrichtung zum Erfassen der Relativbewegung zwischen einem Detektor und einem Körpers mit einer Oberflächenstruktur der oben beschriebenen Art, wobei die Wegstrecke eines in der NC-Maschine zu bewegenden Werkstücks bestimmt wird.

Die Erfindung betrifft ferner ein Entfernungsmeßgerät zur Bestimmung von Entfernungen auf einem Plan oder einer Landkarte mit einer Vorrichtung zum Erfassen der Relativbewegung zwischen einem Detektor und einem Körpers mit einer Oberflächenstruktur der oben beschriebenen Art, wobei der Prozessor eine Rechenfunktion aufweist und Eingabemittel zum Eingeben einer Zahleninformation vorgesehen sind, um den erfassten Weg nach einem Maßstab umzurechnen, der über die Eingabemittel einzugeben ist.

Ausführungsbeispiele der Erfindung werden nun anhand der zeichnungen beschrieben. Es zeigen:
Fig. 1 den prinzipiellen Aufbau der Vorrichtung der vorliegenden Erfindung am Beispiel eines rotationssymmetrischen Körpers in einer Schnittansicht;
Fig. 2 eine Seitenansicht eines rotationssymmetrischen Körpers mit der Anordnung der Referenzmarke und des Detektors der Referenzmarke;
Fig. 3 eine schematische Draufsicht auf ein Werkstück in einer NC-Maschine und den Detektor;
Fig. 4 eine schematische Seitenansicht auf ein Werkstück in einer NC-Maschine und den Detektor; und
Fig. 5 eine schematische Draufsicht einen beweglichen Detektor zur Bestimmung von Entfernungen auf einer Landkarte.

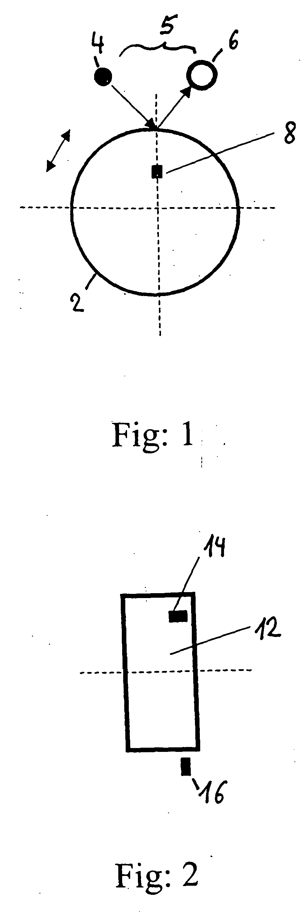

Figur 1 zeigt den prinzipiellen Aufbau der Vorrichtung der vorliegenden Erfindung am Beispiel eines rotationsymmetrischen Körpers 2 in Schnittansicht. An dem Körper 2 ist ein Detektor 5 angeordnet, der eine Lichtquelle 4, zum Beispiel eine lichtemittierende Diode, und eine Kamera 6, zum Beispiel ein Kamerachip, aufweist. Der Detektor 5 erfasst kontinuierlich die Oberflächenstruktur des Körpers 2.

Zur Verarbeitung der Daten der erfassten Oberflächenstruktur ist die Kamera 6 mit einem Prozessor verbunden. Auf dem Prozessor befindet sich ein Programm, das aus der Folge der erfassten Oberflächenstruktur die Bewegungsrichtung und die Geschwindigkeit des sich bewegenden Körpers 2 berechnet und als Ergebnis die Koordinaten des sich bewegenden Körpers 2 bestimmt, die aus der Relativbewegung folgen. Des weiteren befindet sich im axialen Ende des Körpers 2 eine Referenzmarke 8, deren Aufgabe und Funktion in Figur 2 näher beschrieben wird.

Figur 2 zeigt eine Seitenansicht eines rotationssymmetrischen Körpers 12, an dem eine Referenzmarke 14 und ein Sensor 16 zum Erfassen der der Referenzmarke 14 vorgesehen ist. Bei einer Drehung des Körpers 12 wird die Referenzmarke 14, die in Figur 2 am Körper 12 radial angebracht ist, von dem Sensor 16 erfasst. Mit dem Fixieren der Referenzmarke 14 am rotationssymmetrischen Körper 12 wird die zu erfassende Wegstrecke, in diesem Fall der Umfang des rotationssymmetrischen Körpers 12, mit einem Anfangs- und Endpunkt in Form der Referenzmarke 14 definiert.

Somit lässt sich bei einem rotationssymmetrischen Körper mit der Vorrichtung und dem Verfahren der vorliegenden Erfindung eine relative Winkelposition des sich bewegenden Körpers bestimmen. Bei der Bestimmung eines Drehwinkels wird die mit dem Lichtsensor 6 aus Figur 1 erfasste und durch die Referenzmarke 8 bzw. 14 markierte Wegstrecke in eine definierte Anzahl von Inkrementen aufgeteilt. Die erfasste Wegstrecke kann dabei in 360 Inkremente aufgeteilt werden, was dem Gradsystem mit 360 Grad für den Vollkreis entspricht. Neben der Aufteilung in 360 Inkremente sind alle anderen geeigneten Inkrementierungen möglich.

Für die Anwendung bei Wuchtmaschinen dient die Inkrementierung dazu, die Position für eine Unwuchtkompensation beim manuellen oder automatischen Eindrehen von rotationssymmetrischen Körpern zum Ausgleich der Unwucht zu bestimmen. Zum Beispiel können bei einem Elektroanker die Anzahl der Pole (Stege) mit einem Kamerachip erfasst und für die Unwuchtkorrektur am jeweiligen Pol eingedreht werden. Bei Lüftern kann zum Beispiel die Anzahl der Flügel bzw. der Radiatorflügel erfasst und für die Unwuchtkorrektur am jeweiligen Flügel (Komponente) eingedreht werden.

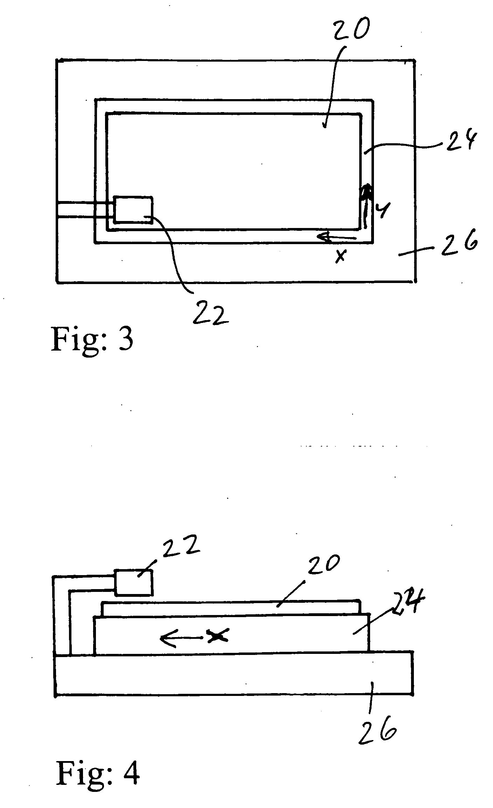

Alternativ zur rotationssymmetrischen Geometrie des beweglichen Körpers 2 bzw. 12 zeigen die Fign. 3 und 4 eine schematische Draufsicht bzw. eine Seitenansicht eines Werkstücks 20 in einer NC-Maschine (numerisch gesteuerten Werkzeugmaschine) und den Detektor 22. In diesem Fall kann der sich bewegende Körper in einer oder mehreren Ebenen bewegen, wobei die Bewegung eines Werkstückschlittens 24 gegenüber einer Maschinenbasis 26 in einer Ebene x - y schematisch dargestellt ist. Der Detektor 22 kann entweder direkt mit dem Werkstück 20 oder mit einer Abtastfläche an der NC-Maschine zusammenwirken, wobei die Abtastfläche dann eine definierte Lage zu dem Werkstück 20 hat.

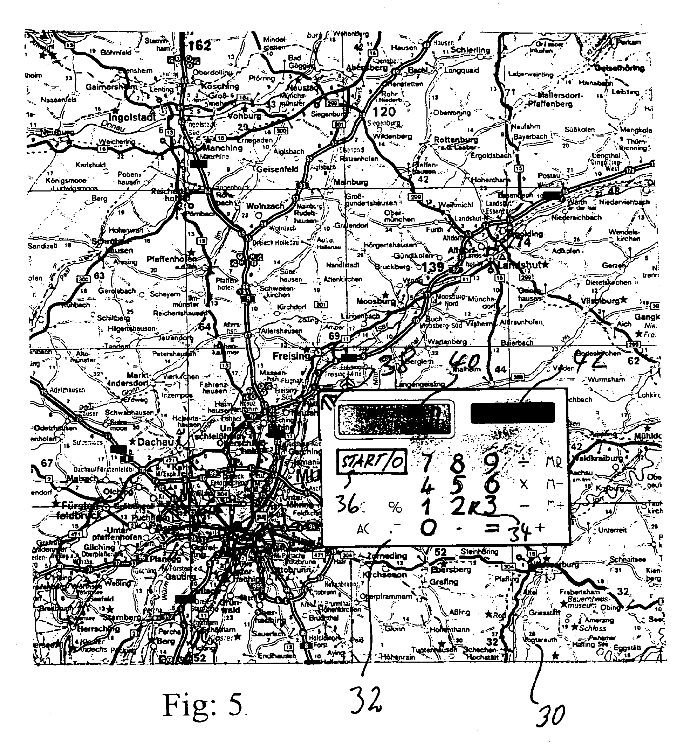

Fig. 5 ist eine schematische Draufsicht auf eine Landkarte 30 mit einem beweglichen Entfernungsmeßgerät 32 zur Bestimmung von Entfernungen auf einem Plan oder einer Landkarte mit einer Vorrichtung zum Erfassen der Relativbewegung zwischen einem Detektor und einem Körpers mit einer Oberflächenstruktur der oben beschriebenen Art, wobei der Prozessor in dem Detektor in dem Entfernungsmeßgerät eine Rechenfunktion aufweist und Eingabemittel 34 zum Eingeben einer Zahleninformation vorgesehen sind, um den erfassten Weg nach einem Maßstab umzurechnen, der über die Eingabemittel einzugeben ist. Das Entfernungsmeßgerät 32 hat ferner eine Start-StopTaste 36, mit der der Beginn und das Ende der Entfernungsmessung eingegeben wird. Eine Refenrenzpfeil 38 dient dazu, das Entfernungsmeßgerät 32 an der zu vermessenden Strecke entlang zu führen. Die Meßergebnisse können auf einem Display 40 angezeigt werden. Eine photoelektrische Zelle dient als Stromversorgung des Entfernungsmeßgeräts 32.

## Patentansprüche

1. Verfahren zur Erfassung einer Relativbewegung zwischen einem Detektor und einem Körpers mit einer Oberflächenstruktur in Form eines Weges und/oder eines Winkels der Relativbewegung **dadurch gekennzeichnet, dass** die Bewegung der Oberflächenstruktur des Körpers mittels einer in dem Detektor vorgesehenen Kamera erfasst wird, dass aus der Folge der erfassten Oberflächenstrukturen die Bewegungsrichtung und die Bewegungsgeschwindigkeit der Relativbewegung bestimmt wird, und dass der zurückgelegte Weg aus der Bewegungsrichtung und der Bewegungsgeschwindigkeit bestimmt wird.

2. Verfahren nach Anspruch 1, wobei der sich bewegende Körper ein rotationssymmetrischer, sich drehender Körper und der Detektor ortsfest angeordnet ist, **dadurch gekennzeichnet, dass** die Oberflächenstruktur an einer an dem sich drehenden Körper vorgesehenen Abtastfläche erfasst wird, und dass der aus der Bewegungsrichtung und der Bewegungsgeschwindigkeit bestimmte, zurückgelegte Weg in einen zurückgelegten Winkel umgerechnet wird.

3. Verfahren nach Anspruch 2, **dadurch gekennzeichnet, dass** der zurückgelegte Weg in eine definierte Anzahl von Inkrementen, beispielsweise 360 Inkremente, aufgeteilt wird.

4. Verfahren nach Anspruch 1, wobei der sich bewegende Körper ein sich in einer Ebene gewegender Körper und der Detektor ortsfest angeordnet ist, **dadurch gekennzeichnet, dass** die Oberflächenstruktur an einer an dem sich drehenden Körper vorgesehenen Abtastfläche erfasst wird, und dass aus der Bewegungsrichtung und der Bewegungsgeschwindigkeit der zurückgelegte Weg des Körpers bestimmt wird.

5. Verfahren nach Anspruch 1, wobei der Körper ortsfest angeordnet ist und der Detektor relativ zu dem Körper bewegt wird, **dadurch gekennzeichnet, dass** die Oberflächenstruktur an einer an dem Körper vorgesehenen Abtastfläche erfasst wird, und dass aus der Bewegungsrichtung und der Bewegungsgeschwindigkeit der Relativbewegung die zurückgelegte Wegstrecke bestimmt wird.

6. Verfahren nach einem der Ansprüche 1 bis 4, **dadurch gekennzeichnet, dass** eine Referenzmarke in vorgegebener Relation zu dem Körper vorgesehen wird.

7. Verfahren nach Anspruch 2, **dadurch gekennzeichnet, dass** die Referenzmarke mit mit einem Sensor erfaßt wird, um den zurück gelegten Weg zu kalibrieren.

8. Verfahren nach Anspruch 3, **dadurch gekennzeichnet, dass** der Sensor eine Fotodiode ist.

9. Verfahren nach einem der vorhergehenden Ansprüche, **dadurch gekennzeichnet, dass** die Oberflächenstruktur des Körpers mit einer Lichtquelle angestrahlt wird.

10. Vorrichtung zur Erfassung einer Relativbewegung zwischen einem Detektor und einem Körpers mit einer Oberflächenstruktur in Form eines Weges und/oder eines Winkels der Relativbewegung **gekennzeichnet durch** eine in dem Detektor vorgesehene Kamera, die die Bewegung der Oberflächenstruktur des Körpers erfasst, und **durch** eine Prozessoreinrichtung, die aus der Folge der erfassten Oberflächenstrukturen die Bewegungsrichtung und die Bewegungsgeschwindigkeit der Relativbewegung und daraus dem zurückgelegte Weg der Relativbewegung bestimmt.

11. Vorrichtung nach Anspruch 10, wobei der sich bewegende Körper ein rotationssymmetrischer, sich drehender Körper und der Detektor ortsfest angeordnet ist, **dadurch gekennzeichnet, dass** die Kamera ausgestaltet ist, um die Oberflächenstruktur an einer an dem sich drehenden Körper vorgesehenen Abtastfläche zu erfassen, und dass der Prozessor ausgestaltet ist, um aus der Bewegungsrichtung und der Bewegungsgeschwindigkeit den zurückgelegten Weg zu bestimmen und ihn in einen zurückgelegten Winkel umzurechnen.

12. Vorrichtung nach Anspruch 10, wobei der sich bewegende Körper ein sich in einer Ebene gewegender Körper und der Detektor ortsfest angeordnet ist, **dadurch gekennzeichnet, dass** die Kamera ausgestaltet ist, um die Oberflächenstruktur an einer an dem sich drehenden Körper vorgesehenen Abtastfläche zu erfassen, und der Prozessor ausgestaltet ist, um aus der Bewegungsrichtung und der Bewegungsgeschwindigkeit der zurückgelegte Weg des Körpers zu bestimmen.

13. Vorrichtung nach Anspruch 10, wobei der Körper ortsfest angeordnet ist und der Detektor relativ zu dem Körper bewegt wird, **dadurch gekennzeichnet, dass** die Oberflächenstruktur an einer an dem Körper vorgesehenen Abtastfläche erfasst wird, und dass der Prozessor ausgestaltet ist, um der Bewegungsrichtung und der Bewegungsgeschwindigkeit der Relativbewegung die zurückgelegte Wegstrecke zu bestimmen.

14. Vorrichtung nach einem der Ansprüche 10 bis 13, **dadurch gekennzeichnet, dass** das Referenzmerkmal eine Markierung oder eine charakteristische Struktur ist.

15. Vorrichtung nach Anspruch 14, **dadurch gekennzeichnet, dass** das Referenzmerkmal eine Kerbe oder ein Strich ist.

16. Vorrichtung nach Anspruch 14 oder 15, **dadurch gekennzeichnet, dass** das Referenzmerkmal eine separate die Refenrenzmarke ist, und dass ein separater Sensor zum Erfassen des Referenzmerkmals vorgesehen ist.

17. Vorrichtung nach Anspruch 16, **dadurch gekennzeichnet, dass** der Sensor eine Fotodiode ist.

18. Vorrichtung nach Anspruch 10, **gekennzeichnet durch** eine Lichtquelle in dem Detektor, mit der die Oberflächenstruktur des Körper angestrahlt wird.

19. Vorrichtung nach Anspruch 18, **dadurch gekennzeichnet, dass** die Lichtquelle eine Licht emittierende Diode (LED) ist.

20. Vorrichtung nach Anspruch 10, **dadurch gekennzeichnet, dass** die Kamera ein Kamerachip ist.

21. Vorrichtung nach Anspruch 20, **dadurch gekennzeichnet, dass** der Kamerachip und der Prozessor auf einem Chip integriert sind.

22. Wuchtmaschine mit einer Vorrichtung nach einem der Ansprüche 11 und 14 bis 21, wobei die Winkellage eines zu wuchtenden Rotors bestimmt wird.

23. NC-Maschine mit einer Vorrichtung nach einem der Ansprüche 12 und 14 bis 21 wobei die Wegstrecke eines in der NC-Maschine zu bewegenden Werkstücks bestimmt wird.

24. Entfernungsmeßgerät zur Bestimmung von Entfernungen auf einem Plan oder einer Landkarte mit einer Vorrichtung nach einem der Ansprüche 10 und 13 bis 21, wobei der Prozessor eine Rechenfunktion aufweist und Eingabemittel zum Eingeben einer Zahleninformation vorgesehen sind, um den erfassten Weg nach einem Maßstab umzurechnen, der über die Eingabemittel einzugeben ist.
